# EUROPÄISCHE PATENTSCHRIFT

(11) **EP 1 589 250 B1**
(45) Veröffentlichungstag und Bekanntmachung des Hinweises auf die Patenterteilung: **18.07.2007**
(21) Anmeldenummer: 05008583.6
(22) Anmeldetag: 20.04.2005
(51) Int. Cl.: F16F 1/02

(54) **Axial belastbare Feder mit stark abfallender Federkennlinie**
Axially loadable spring with strongly decreasing load-deflection characteristics
Ressort chargeable axialement avec caractéristiques fortement degressives

(30) Priorität: 20.04.2004 DE 102004019701; 12.08.2004 DE 102004039135
(43) Veröffentlichungstag der Anmeldung: 26.10.2005
(73) Patentinhaber: Muhr und Bender KG, 57439 Attendorn (DE)
(72) Erfinder: Gold, Gregor, 89522 Heidenheim (DE); Kobelev, Vladimir, Dr., 57439 Attendorn (DE); Schmolla, Wilfried, Dr., 63128 Dietzenbach (DE); Schreiner, Michael, Dipl.-Phys., 63165 Mühlheim (DE)
(74) Vertreter: Neumann, Ernst Dieter

(56) Entgegenhaltungen:
- DE-B- 1 020 215
- FR-A- 2 467 476
- GB-A- 615 750
- US-A- 2 561 405

## Beschreibung

Die Erfindung betrifft eine aus mehreren Federelementen zusammengesetzte axial belastbare Zug-Druck-Feder mit steil abfallender Federkennlinie. Als Federkennlinie wird hier und im weiteren wie üblich das Verhältnis von Federkraft F über der Längenänderung bzw. dem Verformungsweg X in graphischer Darstellung bezeichnet (Kraft-Weg-Kennlinie). Als Federrate R wird die Ableitung der Federkraft nach dem Verformungsweg X (dF/dX) bezeichnet.

Als Beispiele für Federn, die eine nichtlineare Kennlinie mit einem ansteigenden Kennlinienabschnitt I mit einer Federrate R₁ bis zu einem Maximum und einem abfallenden Kennlinienabschnitt mit einer Federrate R₂ haben, sind Tellerfedern zu nennen. Im Anschluß an den zweiten Kennlinienabschnitt II geht die Kennlinie nach einem Minimum in einen dritten Kennlinienabschnitt III über.

Nachteilig bei Tellerfedern ist der geringe zur Verfügung stehende Verformungsweg. Hierbei sind im Bereich großer Zahlenverhältnisse von Federhöhe hₒ zu Federdicke t die Federraten R₁ und R₂ dem Betrag nach gleich.

In der DE 32 22 257 A1 wird eine axial belastbare Zug-, Druck- oder Zug-Druckfeder beschrieben, die aus einem Stab- oder Flachprofil aufgebaut ist, zwischen dessen geraden axialen Einspannenden ein mehrfach gewellter Bereich liegt und die Wellung so ausgebildet ist, daß die Feder momentfrei gelagert werden kann.

Aus der US-A-2 561 405 ist eine Stellvorrichtung bekannt, die eine umschlagende Tellerfeder umfaßt, die mit einer Schraubendruckfeder in Reihe geschaltet ist, wobei ein Stellglied in einer Richtung die Tellerfeder und in der Gegenrichtung die Schraubendruckfeder beaufschlagt und einen Freigang in Stellrichtung aufweist.

Aus der FR-A-2 467 476 ist ein elektrischer Druckschalter mit Schnappeffekt bekannt, bei dem eine bistabile Blechfeder einen elektrischen Schaltkontakt stellungsabhängig schließt oder unterbricht. Die bistabile Blechfeder wird über eine Schraubendruckfeder von einem Druckknopf beaufschlagt. Der Schaltkontakt wird nur geschlossen, wenn der Druckknopf betätigt wird.

Bei einer Freigabe des Druckknopfes öffnet sich der Schaltkontakt spontan.

Hiervon ausgehend liegt der vorliegenden Erfindung die Aufgabe zugrunde, eine Feder bereitzustellen, mit der eine stark abfallende Federkennlinie dargestellt werden kann. Bevorzugt soll eine einfache Herstellung möglich sein.

Die Lösung hierfür besteht aus einer aus mehreren Federelementen zusammengesetzten Feder umfassend zwei Federelemente, von denen zumindest ein Federelement bei Abstützung an einem Widerlager eine nichtlineare Kennlinie aufweist, wobei die Federelemente in Reihe geschaltet sind und die zwei Federelemente zur Übertragung von Zug- und Druckkräften miteinander fest verbunden sind und die zusammengesetzte Feder bei Abstützung an einem Widerlager einen ansteigenden ersten Kennlinienabschnitt I mit einer Federrate R₁ bis zu einem Maximum und einen abfallenden zweiten Kennlinienabschnitt II mit einer Federrate R₂ hat. Das andere der Federelemente kann bei Abstützung an einem Widerlager vorzugsweise eine im wesentlichen lineare Kennlinie aufweisen.

Hiermit können Federn dargestellt werden, bei denen die Federrate R₂ des zweiten Kennlinienabschnitts II unendlich werden kann, d.h. die Kennlinie fällt senkrecht ab. Darüberhinaus kann der zweite Kennlinienabschnitt II sogar mit positiver Steigung unterhalb des ersten Kennlinienabschnitts I liegen. Beispiele hierfür werden später graphisch dargestellt. Der zweite Kennlinienabschnitt II kann einen Nulldurchgang aufweisen.

Bevorzugte Ausführungen gehen dahin, daß die Federrate R₂ des zweiten Kennlinienabschnitts II dem Betrag nach größer ist als die Federrate R₁ des ersten Kennlinienabschnitts I, d.h. |R₂|>|R₁|, und weiterhin, daß sich an den zweiten Kennlinienabschnitt II in einem Minimum ein dritter Kennlinienabschnitt III mit einem weiteren Nulldurchgang anschließt.

Die erfindungsgemäße Verbindung aus einem ersten Federelement mit einem zweiten Federelement ermöglicht die Bildung einer Feder mit einer stabilen Mittenlage sowie zwei stabilen Endpositionen, das beispielsweise zur Speicherung der kinetischen Energie im Zusammenhang mit einer Aktuatorbewegung oder dem leistungslosen Halten einer Endpositionen verwendet werden kann.

In Ausgestaltung der erfindungsgemäßen Feder ist der Grad der Steilheit des Abfalls der Kraft-Weg-Kennlinie im zweiten Kennlinienabschnitt durch Verändern der Federkonstanten des ersten Federelements veränderbar.

Der zweite Kennlinienabschnitt kann beispielsweise eine negativ-differentielle Kraft-Weg-Kennlinie aufweisen.

Federn der hiermit genannten Art erlauben eine besonders günstige Verwendung in Betätigungs- oder Verstellvorrichtungen mit zwei stabilen Endstellungen oder Ruhestellungen. Hierbei wird die Federeinheit so eingesetzt, daß sie in den Endstellungen bzw. Ruhestellungen der Vorrichtung sich nahe den beiden Nulldurchgängen ihrer Federkennlinie befindet. Damit wird sichergestellt, daß von Null abweichende Betätigungskräfte nur zur Verstellung von der einen End- bzw. Ruheposition in die andere End- oder Ruheposition aufgebracht werden müssen, während die Vorrichtung in den genannten Positionen frei von äußeren Haltekräften von der Federeinheit gehalten werden kann.

In besonders günstiger konkreter Ausgestaltung ist vorgesehen, daß das erste Federelement aus einer zu einer geschlossenen Kurve gebogenen Bandfeder gebildet wird. Weiterhin wird vorgeschlagen, daß das zweite Federelement von einer mehrfach gebogenen Bandfeder, einer Membranfeder oder einer Tellerfeder gebildet wird.

Eine besonders günstige konstruktive Ausführung besteht darin, daß das erste Federelement und das zweite Federelement von Bandfedern gebildet werden, die aus einem einzigen Blechzuschnitt oder Stanzteil in senkrecht zueinander liegenden Biegeebenen gebogen und anschließend wärmebehandelt sind. Alternativ dazu ist es möglich, daß das erste Federelement und das zweite Federelement von Bandfedern gebildet werden, von denen eine mit der anderen mittels Laschen verklammert ist. Weiterhin wird vorgeschlagen, daß das erste Federelement und das zweite Federelement von Bandfedern gebildet werden, von denen eine mit der anderen vernietet ist. Die beiden letztgenannten Ausführungen können bei Anordnung der Bandfedern in einer Biegeebene sehr schmal und platzsparend bauen. Mit den genannten Verbindungsarten wird eine Schweißverbindung zwischen den Elementen vermieden, die zur Beeinträchtigung der Federeigenschaften führen könnte.

Hiermit wird eine kostengünstige Herstellung eines Federsystems mit negativdifferentieller Kraft-Weg-Kennlinie, ermöglicht, die auf einer geschickten Kombination einer nach linearem Kraft-Weg-Gesetz wirkenden Freiformfläche mit einer nach nichtlinearem Kraft-Weg-Gesetz wirkenden Freiformfläche beruht.

In weiterer Ausgestaltung der erfindungsgemäßen Feder weist ein oberer Teil des gebogenen Stanzteils die lineare Federcharakteristik und ein unterer Teil des gebogenen Stanzteils die nichtlineare Federcharakteristik auf.

Eine weiterführende Lösung besteht aus einem aus mehreren erfindungsgemäßen Federn zusammengesetztem Federsystem, umfassend zwei Federn mit steil abfallender Federkennlinie, die jeweils gebildet sind aus
zwei Federelementen, von denen zumindest ein Federelement mit nichtlinearer Kennlinie behaftet ist, wobei die Federelemente in Reihe geschaltet sind und die zwei Federelemente zur Übertragung von Zug- und Druckkräften miteinander fest verbunden sind und die zusammengesetzten Federn jeweils einen ansteigenden ersten Kennlinienabschnitt I mit einer Federrate R₁ bis zu einem Maximum und einen abfallenden zweiten Kennlinienabschnitt II mit einer Federrate R₂ haben,
wobei die zwei Federn ihrerseits - insbesondere in symmetrischer Anordnung - parallel geschaltet und zur Übertragung von Zug- und Druckkräften miteinander fest verbunden sind. Auch hierbei kann der zweite Kennlinienabschnitt einen Nulldurchgang haben.

Die weiteren Eigenschaften ebenso wie der konstruktive Aufbau der beiden Federn entspricht hierbei vorzugsweise den bereits vorbeschriebenen Kombinationsfedern aus einem ersten Federelement mit linearer Kennlinie und einem zweiten Federelement mit nichtlinearer Kennlinie.

Soweit von den genannten Federelementen gesprochen wird, ist anzumerken, daß diese auch jeweils aus mehreren beispielsweise geschichteten Einzelteilen zusammengesetzt sein können. Das Wort Federelement ist insoweit nicht auf die Einstükkigkeit beschränkt.

Eine bevorzugte Verwendung eines Federsystems nach der letztgenannten Lösung, bei der jeweils die Federelemente mit linearer Kennlinie der beiden Federn innen liegen und unmittelbar miteinander verbunden sind, ist dadurch gekennzeichnet, daß eine Krafteinleitung im Bereich der Verbindung der beiden Federelemente mit linearer Kennlinie erfolgt und die außenliegenden Federelemente mit nichtlinearer Kennlinie der beiden Federn sich an außenliegenden festen Widerlagern abstützen. Eine bevorzugte Verwendung einer Federeinheit nach der letztgenannten Lösung, bei der jeweils die Federelemente mit linearer Kennlinie der beiden Federn außen liegen und über ein Koppelelement miteinander verbunden sind, ist dadurch gekennzeichnet, daß eine Krafteinleitung in die Koppel erfolgt und die innenliegenden Federelemente mit nichtlinearer Kennlinie der beiden Federn sich an einem zentralen Widerlager abstützen.

Hiermit umfaßt ein erfindungsgemäßes Federsystem eine erste Feder aus einem ersten und einem zweiten Federelement, das mit einer zweiten Feder aus einem ersten und einem zweiten Federelement verbunden ist, so daß das Federsystem eine stabile Mittellage und zwei stabile Endpositionen aufweist.

Das erfindungsgemäße Federsystem kann beispielsweise in einem Ventil mit selbsthaltenden Endpositionen eingesetzt werden.

Vorteilhafte Ausführungen der Erfindung sind in den Zeichnungen dargestellt und werden nachfolgend beschrieben.

Dabei zeigen:
- Figur 1: Kennlinien von nichtlinearen Federn nach dem Stand der Technik
a) die Federkennlinie einer ersten Feder,
b) die Ableitung der Federkennlinie nach a),
c) die Federkennlinie einer zweiten Feder
d) die Ableitung der Federkennlinie nach c);
- Figur 2: Kennlinien einer erfindungsgemäßen Feder in einer ersten Ausführung
a) die Federkennlinie
b) die Ableitung der Federkennlinie;
- Figur 3: Kennlinien einer erfindungsgemäßen Feder in einer zweiten Ausführung
a) die Federkennlinie
b) die Ableitung der Federkennlinie;
- Figur 4: Kennlinien eines dritten Ausführungsbeispiels einer erfindungsgemäßen Feder;
- Figur 5: Kennlinien eines vierten Ausführungsbeispiels einer erfindungsgemäßen Feder;
- Figur 6: Kennlinien eines fünften Ausführungsbeispiels einer erfindungsgemäßen Feder;
- Figur 7: Kennlinien eines sechsten Ausführungsbeispiels einer erfindungsgemäßen Feder;
- Figur 8: Kennlinien eines siebten Ausführungsbeispiels einer erfindungsgemäßen Feder;
- Figur 9: Kennlinien eines achten Ausführungsbeispiels einer erfindungsgemäßen Feder;
- Figur 10: ein Ersatzschaubild einer erfindungsgemäßen Feder;
- Figur 11: eine erfindungsgemäße Feder in 3D-Darstellung in einer ersten Ansicht;
- Figur 12: die erfindungsgemäße Feder nach Figur 11 in einer zweiten Ansicht;
- Figur 13: den Blechzuschnitt für eine Feder nach den Figuren 11 und 12;
- Figur 14: eine Feder in einer zweiten Ausführung in 3D-Darstellung;
- Figur 15: ein Federsystem gemäß der Erfindung in einer ersten Anwendung als Prinzipbild;
- Figur 16: ein Federsytem gemäß der Erfindung in einer zweiten Anwendung als Prinzipbild;
- Figur 17: eine schematische Darstellung einer Bandfeder mit einer ersten Lagerart;
- Figur 18: eine schematische Darstellung der Bandfeder aus Fig. 7 mit einer zweiten Lagerart;
- Figur 19: eine schematische Darstellung der Bandfeder aus Fig. 7 mit einer dritten Lagerart;
- Figur 20: eine schematische räumliche Darstellung der Bandfeder aus Fig. 7;
- Figur 21: eine schematische Darstellung der erfindungsgemäßen Feder mit der Bandfeder aus Fig. 7 und einer Linearfeder;
- Figur 22: eine schematische Darstellung eines Stanzteils zur Herstellung der erfindungsgemäßen Feder;
- Figur 23: eine schematische räumliche Darstellung eines Ausführungsbeispiels des erfindungsgemäßen Federsystems ohne Krafteinwirkung;
- Figur 24: eine schematische räumliche Darstellung des Ausführungsbeispiels des erfindungsgemäßen Federsystems aus Fig. 14 unter Krafteinwirkung;
- Figur 25: eine schematische räumliche Darstellung eines Ausführungsbeispiels des erfindungsgemäßen Federsystems;
- Figur 26: eine schematische Schnittdarstellung eines Ausführungsbeispiels des erfindungsgemäßen Federsystems, und
- Figur 27: eine schematische Schnittdarstellung eines Ventils mit einem Ausführungsbeispiels des erfindungsgemäßen Federsystems.

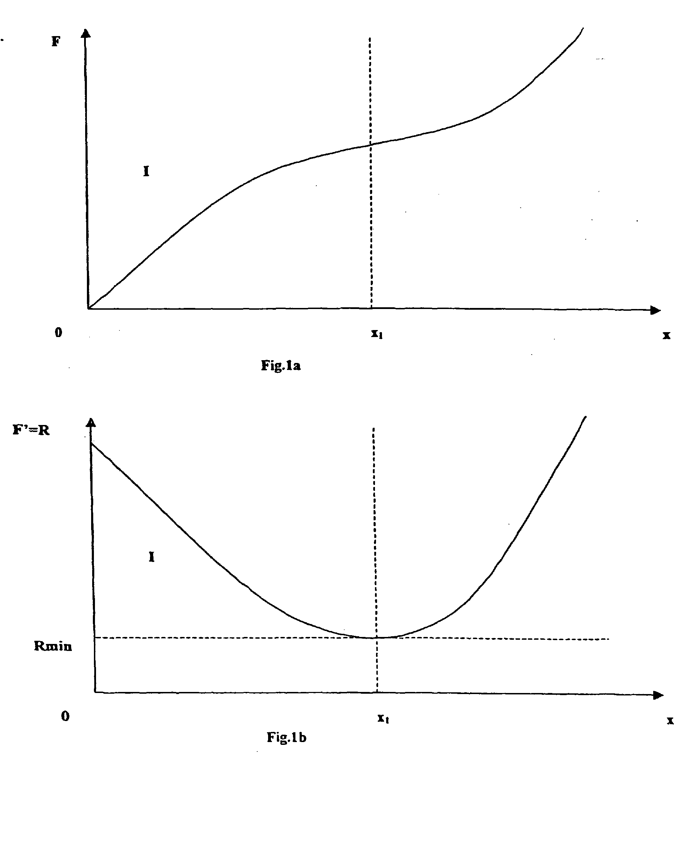

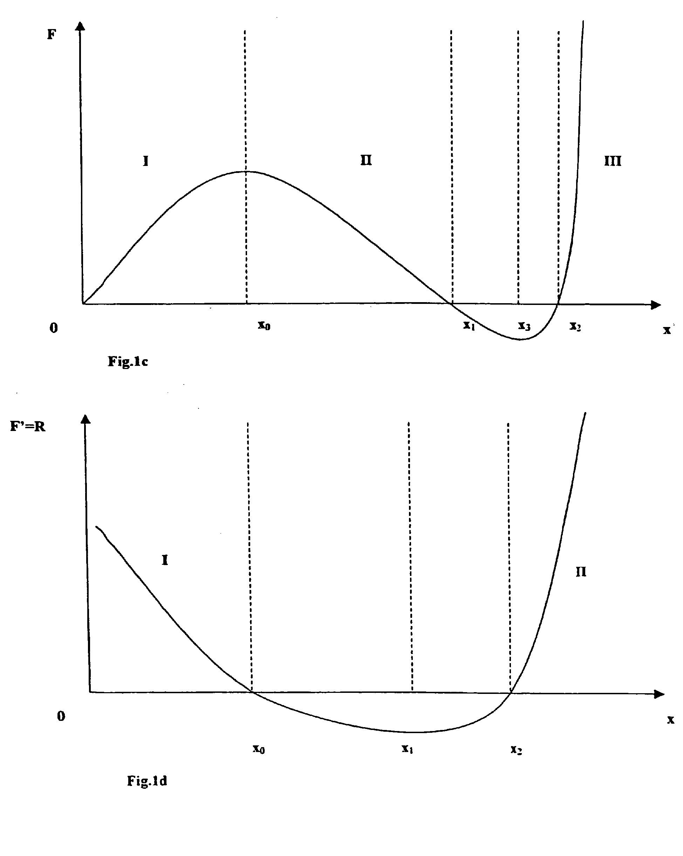

Figur 1 zeigt die Kennlinie zweier einzelner nichtlinearen Federn, beispielsweise von doppelt gebogenen Bandfedern nach dem Stand der Technik. Die nachstehend beschriebenen einzelnen Federn lassen sich zu einer Feder gemäß der Erfindung kombinieren. In Darstellung a) hat die Kennlinie der ersten Feder eine stetig ansteigende Federkennlinie mit einem Wendepunkt. In Darstellung b) ist die Ableitung der Federkraft F nach dem Federweg X, d.h. die Federrate gezeigt, die ein Minimum Rₘᵢₙ größer 0 bei X₁ hat. In Darstellung c) hat die Kennlinie der zweiten Feder einen ersten Abschnitt I mit zunächst ansteigender Kennlinie bis zu einem Maximum bei X₀ und einen zweiten Abschnitt II mit hierzu symmetrisch abfallender Kennlinie bis zu einem Nulldurchgang bei X₁ und weiter bis zu einem Minimum X₃. Hieran schließt sich ein dritter Kennlinienabschnitt III an mit einem weiteren Nulldurchgang bei X₂. In Darstellung d) ist die Ableitung der Federkraft F nach dem Federweg X der zweiten Feder gezeigt, das heißt die Federrate R, wobei Nulldurchgänge bei X₀ und X₂ und ein Minimum bei X₁ zu erkennen ist.

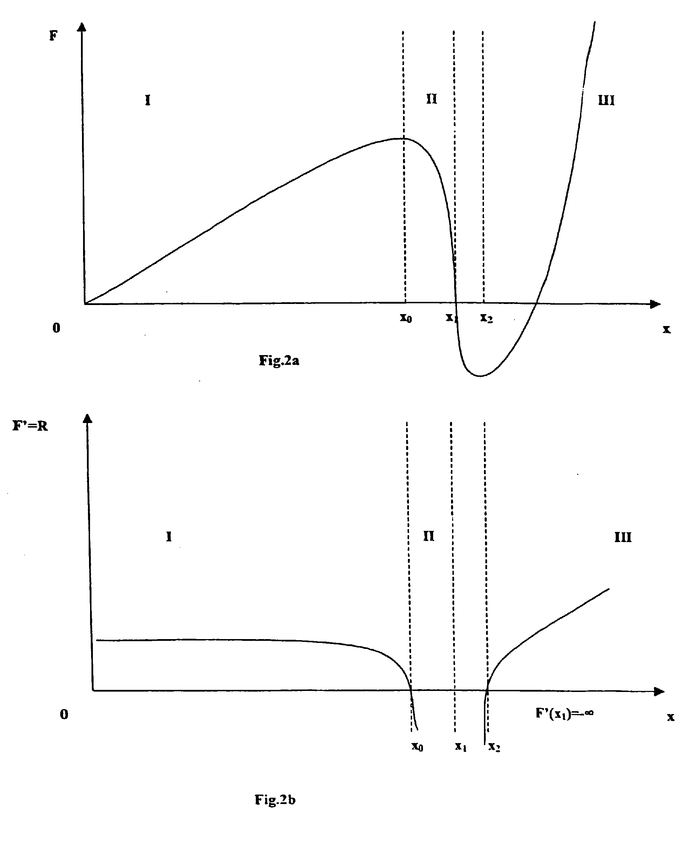

In Figur 2 sind Kennlinien einer erfindungsgemäßen Kombinationsfeder, bestehend aus einem Element mit linearer Kennlinie und einem Element mit nichtlinearer Kennlinie in einer ersten Ausführung gezeigt. Darstellung a) zeigt die Federkennlinie (Kraft F über Federweg X). Darstellung b) zeigt die Ableitung F' nach dem Federweg X. Die Federkennlinie umfaßt einen ersten Abschnitt I bis zu einem Maximum bei X₀, einen zweiten Kennlinienabschnitt II vom Maximum bei X₀ bis zu einem Minimum bei X₂ sowie einen dritten Kennlinienabschnitt III, der sich an den zweiten anschließt. Bei X₁ ist ein Nulldurchgang. Die Steigung des zweiten Kennlinienabschnitts II ist negativ. Dies ist erkennbar aus der Darstellung b), wobei die Federrate des ersten Abschnitts I einen Nulldurchgang bei X₀ hat und bei X₁ negativ ist und die Federrate des dritten Kennlinienabschnitts III symmetrisch dazu in Bezug auf X₁ mit einem Nulldurchgang bei X₂ ist. F' von X₁ kann hierbei auch minus unendlich werden.

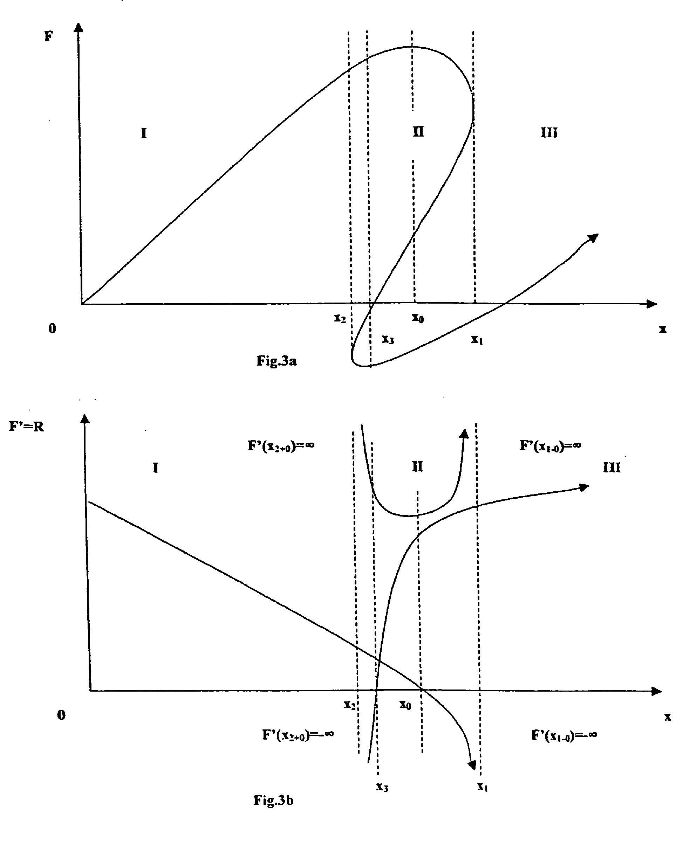

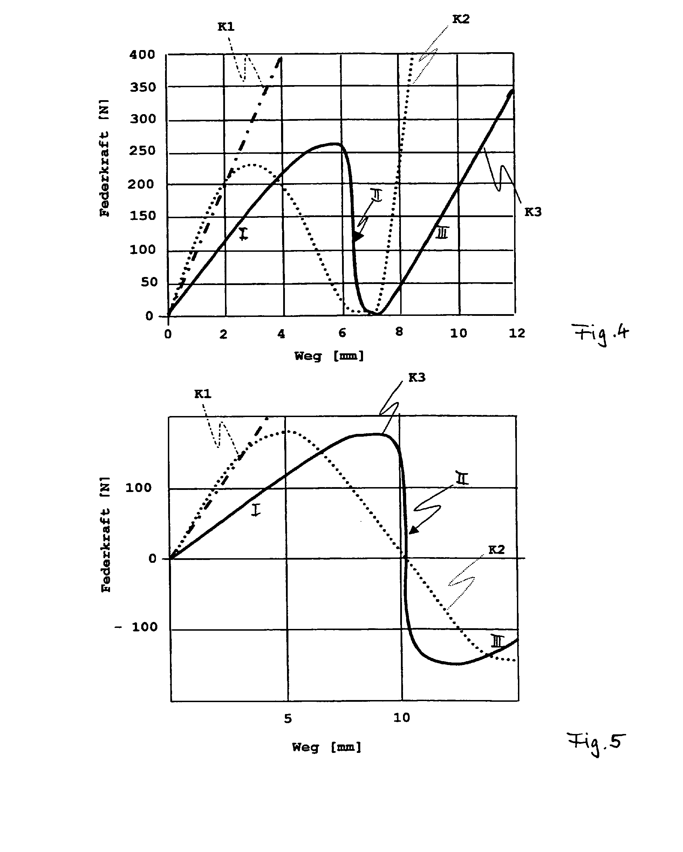

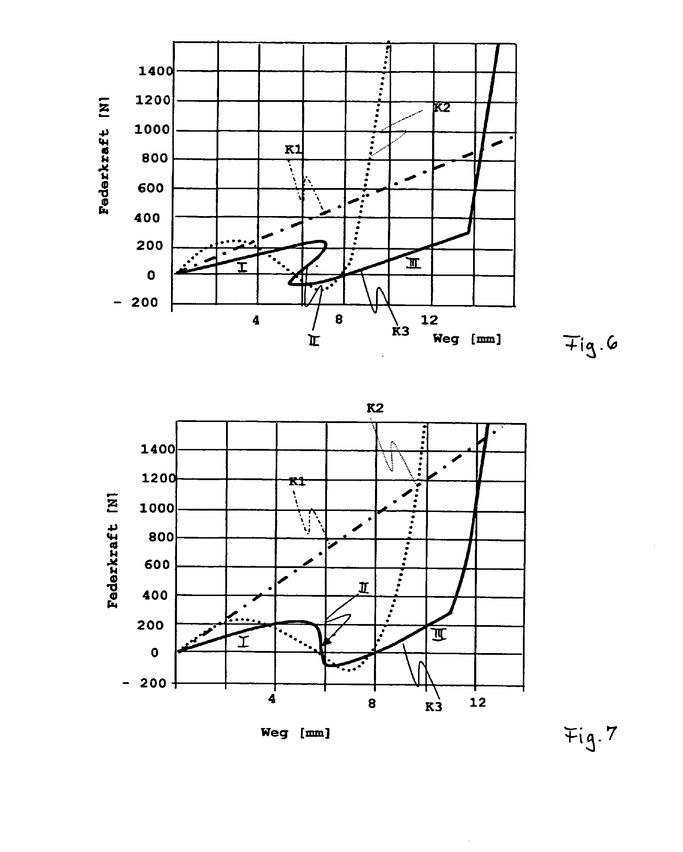

In Figur 3 sind Kennlinien einer erfindungsgemäßen Kombinationsfeder, bestehend aus einem Element mit linearer Kennlinie und einem Element mit nichtlinearer Kennlinie in einer zweiten Ausführung gezeigt. In Darstellung a) ist die Federkennlinie gezeigt, wobei ein erster Kennlinienabschnitt I bis zu einem Maximum bei X₀ geht, ein zweiter Kennlinienabschnitt II über einen ersten Umkehrpunkt mit unendlicher Steigung bei X₂ und einen zweiten Umkehrpunkt mit unendlicher Steigung bei X₂ zu einem Minimum bei X₃ geht und ein dritter Kennlinienabschnitt III im Anschluß hieran in Bezug auf einen Nulldurchgang bei X₄ symmetrisch zum ersten Abschnitt I verläuft.

In Darstellung b) sind die Federraten der genannten Abschnitte gezeigt, wobei die Federrate des Abschnitts I abfallend mit einem Nulldurchgang bei X₀ verläuft und bei X₁ gegen minus unendlich geht, die Federrate des Abschnitts III bei X₂ von minus unendlich kommend einen Nulldurchgang bei X₃ hat und ansteigend verläuft und die Federrate des Kennlinienabschnitts II von unendlich bei X₂ gegen unendlich bei X₁ verläuft und bei X₄ ein Minimum hat.

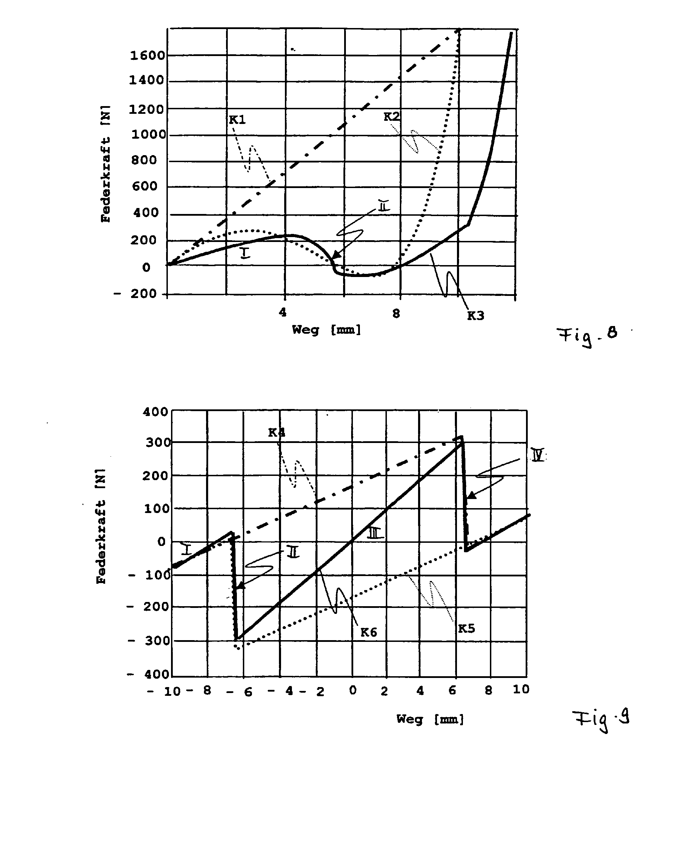

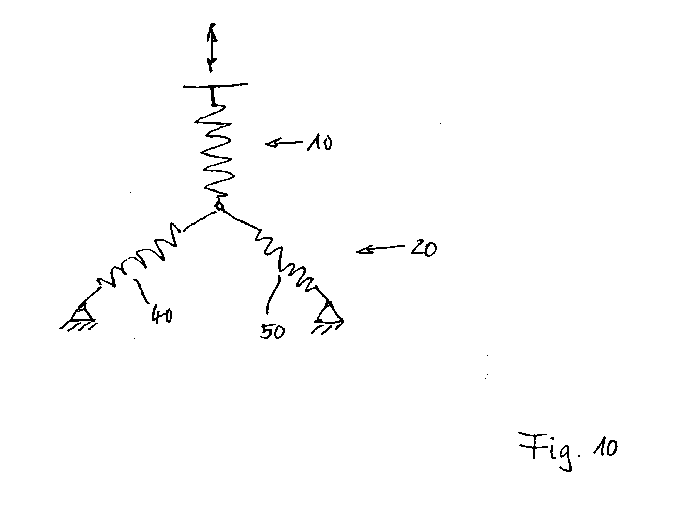

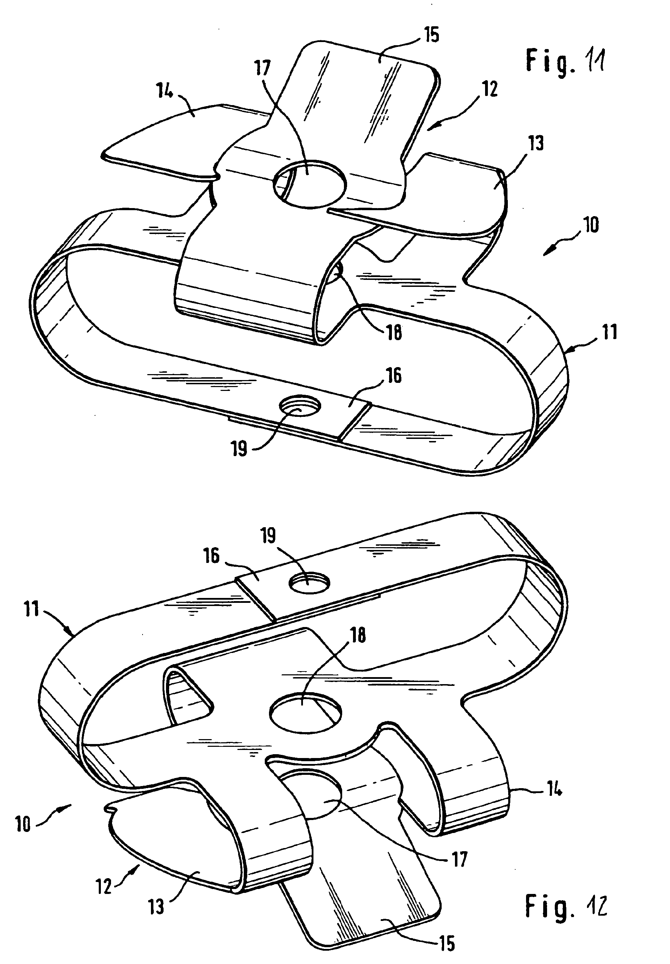

Fig. 4 zeigt Kennlinien eines dritten Ausführungsbeispiels einer zusammengesetzten Feder bestehend aus einer seriellen Anordnung eines ersten Federelements mit einer linearen Kraft-Weg-Kennlinie K1 und eines zweiten Federelements mit einer nichtlinearen Kraft-Weg-Kennlinie K2. Wie aus Fig. 4 ersichtlich ist, weist die resultierende Kraft-Weg-Kennlinie K3 der zusammengesetzten Feder einen Bereich II mit einem steilen Abfall auf. Durch die serielle Anordnung des als Linearfeder ausgeführten ersten Federelements und eines beispielsweise als nichtlineare Bandfeder aufgeführten zweiten Federelements erhält man die dargestellte Federcharakteristik K3 mit dem steilen Abfall II. Der Grad des Abfalls II kann durch die Einstellung der Federkonstante der Linearfeder gewählt werden, wie aus den Fig. 2 bis 5 ersichtlich ist.

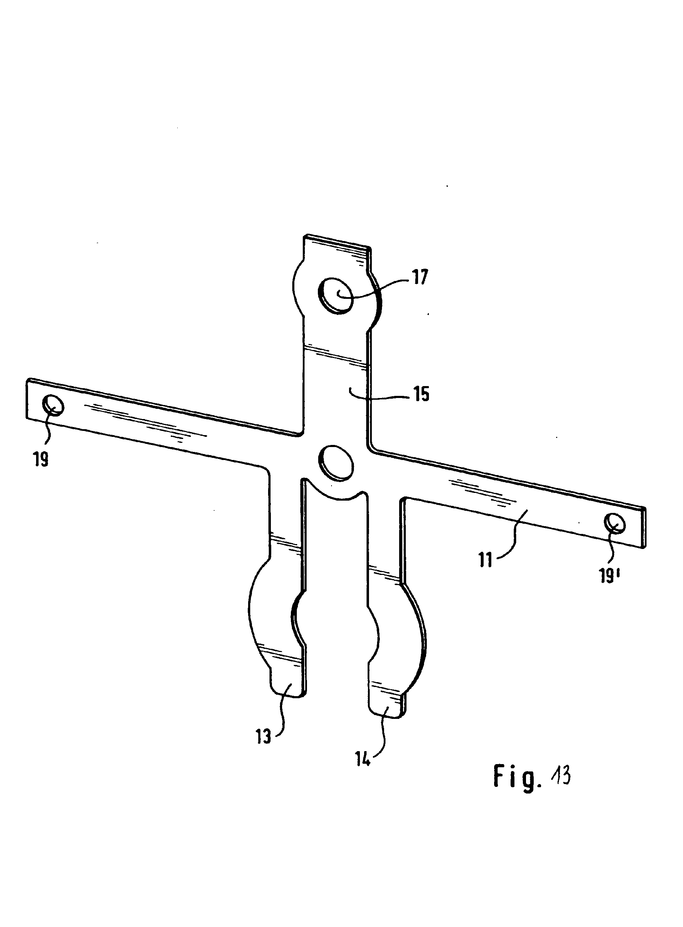

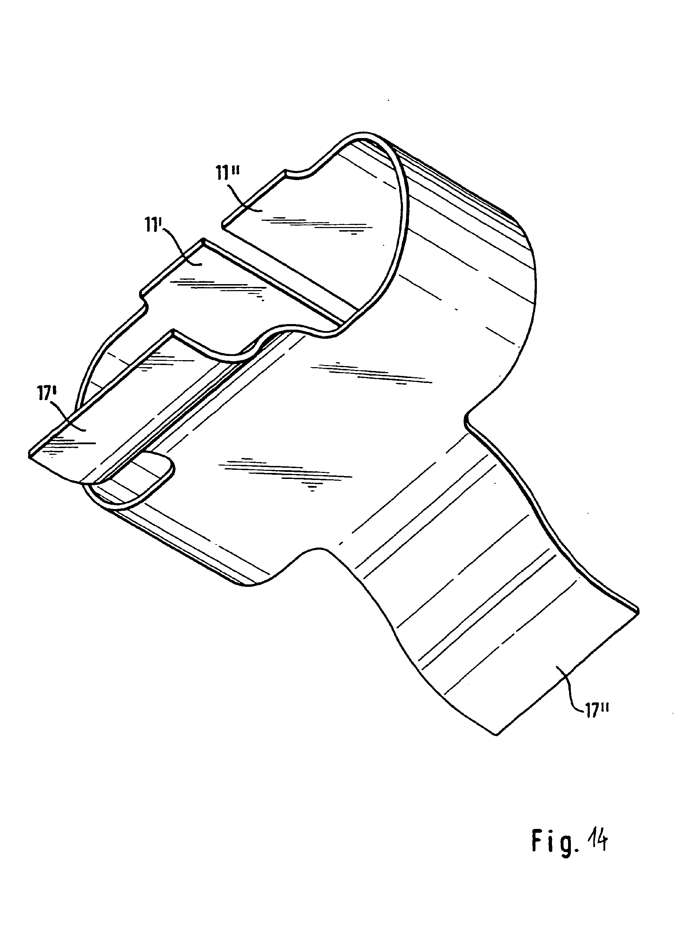

Fig. 5 bis Fig. 8 zeigen jeweils Kennlinien von weiteren Ausführungsbeispielen einer zusammengesetzten Feder bestehend aus einer seriellen Anordnung eines ersten Federelements mit einer linearen Kraft-Weg-Kennlinie K1 und eines zweiten Federelements mit einer nichtlinearen Kraft-Weg-Kennlinie K2. Wie aus Fig. 5 bis Fig. 8 ersichtlich ist, weisen die resultierenden Kraft-Weg-Kennlinien K3 der Federsysteme jeweils einen Bereich mit einem steilen Abfall auf. Der Grad der Steilheit des Abfalls kann durch Einstellung der Federkonstanten des ersten Federelements mit der linearen Kraft-Weg-Kennlinie K1 verändert werden. In den dargestellten Ausführungsbeispielen der Fig. 5 bis 8 ist jeweils das zweite Federelement mit der nichtlinearen Kraft-Weg-Kennlinie K2 so ausgelegt, daß die Kraft auch nach dem Nulldurchgang weiter abnimmt und erst dann wieder ansteigt.

Fig. 9 zeigt Kennlinien eines sechsten Ausführungsbeispiels eines erfindungsgemä-ßen Federsystems bestehend aus einer Kombination von zwei Federn, die jeweils eine nichtlineare Kraft-Weg-Kennlinie K4 bzw. K5 aufweisen. Die beiden Federn umfassen beispielsweise jeweils eine serielle Anordnung eines ersten Federelements mit einer linearen Kraft-Weg-Kennlinie K1 und eines zweiten Federelements mit einer nichtlinearen Kraft-Weg-Kennlinie K2. Wie aus Fig. 9 ersichtlich ist, weist die resultierende Kraft-Weg-Kennlinie K6 des Federsystems zwei Bereiche B1, B2 mit einem steilen Abfall auf. Das dargestellte Federsystem weist eine stabile Mittenlage sowie zwei stabile Endpositionen auf.

In Figur 10 ist das Ersatzschaubild einer erfindungsgemäßen kombinierten Feder mit einem ersten Federelement 10 mit linearer Kennlinie und einem zweiten Federelement 20 mit nichtlinearer Kennlinie gezeigt, wobei letzteres aus zwei unter einem Winkel an dem Element 10 angreifenden Einzelelementen 40, 50 besteht.

Die Figuren 11 und 12 werden nachstehend gemeinsam beschrieben. Die Figuren zeigen eine kombinierte Feder 10 aus einem Element mit einer linearen Kennlinie (unten) und einem Element mit einer nichtlinearen Kennlinie (oben). Das Element 11 mit linearer Kennlinie ist eine Bandfeder, die zu einer flachen Schlaufe rundgebogen ist und insoweit zwei entgegengesetzt angeordneten C-förmigen Bügelfedem entspricht.

Das Element 12 mit nichtlinearer Kennlinie besteht aus zwei mehrfach gebogenen äußeren Bügeln 13, 14 mit jeweils einem Wendepunkt in der Biegung und einem mittleren mehrfach gebogenen Bügel 15 ebenfalls mit einem Wendepunkt in der Biegung. Die Bügel 13, 14 15 gehen einstückig in die Bandfeder 11 über, die bei 16 überlappend geschlossen ist. In zueinander koaxialer Anordnung findet sich eine Bohrung 17 im Bügel 15 sowie Bohrungen 18, 19 im Federelement 11. Die Achse der Bohrungen entspricht der Achse der Federbewegung.

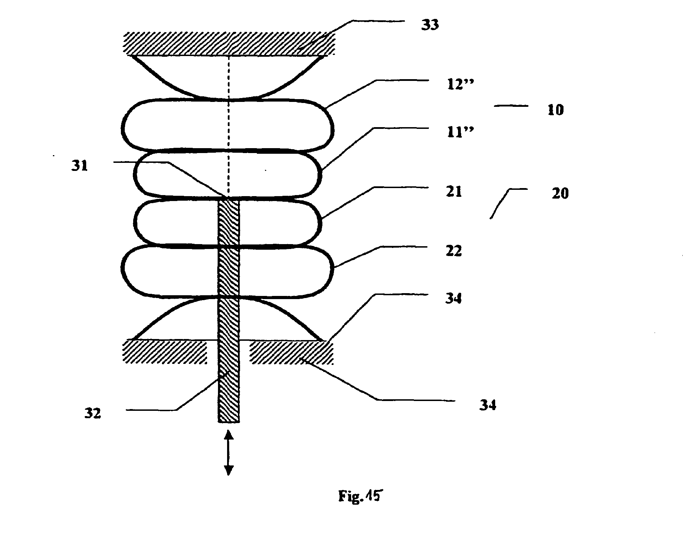

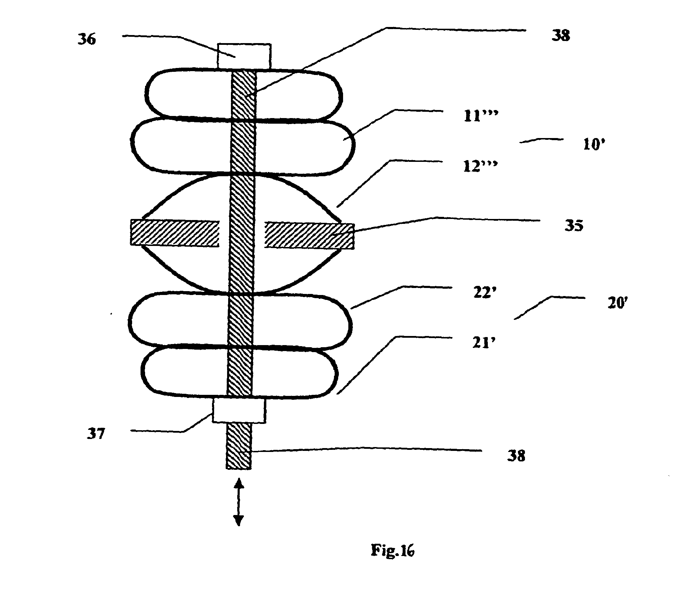

In Figur 13 ist ein Blechzuschnitt gezeigt, aus dem die Feder nach den Figuren 5 und 6 in leicht nachvollziehbarer Weise jeweils durch Biegen der erkennbaren Bandabschnitte in einer Richtung erfolgen kann. Die einzelnen Abschnitte sind mit gleichen Bezugsziffern wie in den Figuren 5 und 6 bezeichnet. Das Loch 19, 19' ist doppelt vorgesehen und kommt durch Rundbiegen des Bandabschnitts 11 aufeinander zu liegen.

In Figur 14 ist eine erfindungsgemäße Feder in einer zweiten Ausführung gezeigt. Als Element mit linearer Kennlinie sind zwei C-förmige Bandfederabschnitte 11', 11" erkennbar, die nicht miteinander verbunden sind. Als Elemente mit nichtlinearer Kennlinie sind daran einstückig ansetzende mehrfach gebogene Bandfedern 17', 17" gezeigt, die jeweils einen Wendepunkt im Biegeverlauf haben.

Figur 15 zeigt eine erfindungsgemäße Federkombination bestehend aus zwei Einheiten 10, 20, die jeweils aus einem Federelement mit linearer Kennlinie 11", 21 und einem Federelement mit nichtlinearer Kennlinie 12", 22 bestehen. Diese sind über ein Verbindungselement 31 symmetrisch miteinander verbunden und über eine Zug-/Druckstange 32 betätigbar. Die Federn mit nichtlinearer Kennlinie 12", 22 stützen sich an äußeren Widerlagern 33, 34 ab. Aufgrund der metastabilen Eigenschaft der kombinierten Federn mit zwei Nulldurchgängen der Federkennlinie sind zwei stabile Zustände einstellbar, bei denen jeweils eine der Einheiten 10, 20 verkürzt und die andere verlängert ist. Das heißt, beide Einheiten sind aus ihrer Mittellage heraus, die hier dargestellt ist, verformt. In der hier gewählten Ausführung liegen die Bandfedern alle in einer Ebene.

In Figur 16 ist eine erfindungsgemäße Federkombination aus zwei kombinierten Federeinheiten 10', 20' gezeigt, die jeweils aus außenliegenden Federelementen 11"', 21' mit konstanter Federkennlinie und zweiten Federelementen 12"', 22' mit nichtlinearer Kennlinie bestehen. Über Befestigungspunkte 36, 37 sind die außenliegenden Federn mit linearer Kennlinie 11"', 21' über eine Koppelstange 38 miteinander verbunden. Die jeweils innenliegenden Federn 12"', 22' mit nichtlinearer Kennlinie stützen sich an einem mittig angeordneten Widerlager 35 ab. Über die verlängerte Koppel 38' werden Axialkräfte in die Elemente 11"', 21' eingeleitet. Wie bereits im Zusammenhang mit der Ausführung nach Figur 9 beschrieben, hat auch diese Einheit metastabiles Verhalten, wobei jeweils eine der Federn verkürzt und die andere verlängert ist, wenn stabile axialkraftfreie Zustände in zwei verschiedenen Positionen eintreten.

Fig. 17 bis 19 zeigen jeweils eine Schnittdarstellung eines zweiten Federelements 52 des Federsystems, das als nichtlineare Bandfeder 52 ausgeführt ist. Durch Verändern der Abmessungen der Bandfeder 52, d.h. durch Verändern der Breite, Dicke und/oder Länge der Bandfeder 52 lassen sich die Maxima und/oder Minima der Kraft-Weg-Kennlinie der Bandfeder 52 einstellen, d.h. die maximale und/oder minimale Federkraft sowie der Federweg. Durch verschiedene Lagerbedingungen 2.1, 2.2, 2.3 lassen sich verschiedene Einspannbedingungen wie fest, nachgebend usw. einstellen und Symmetrien vorgeben.

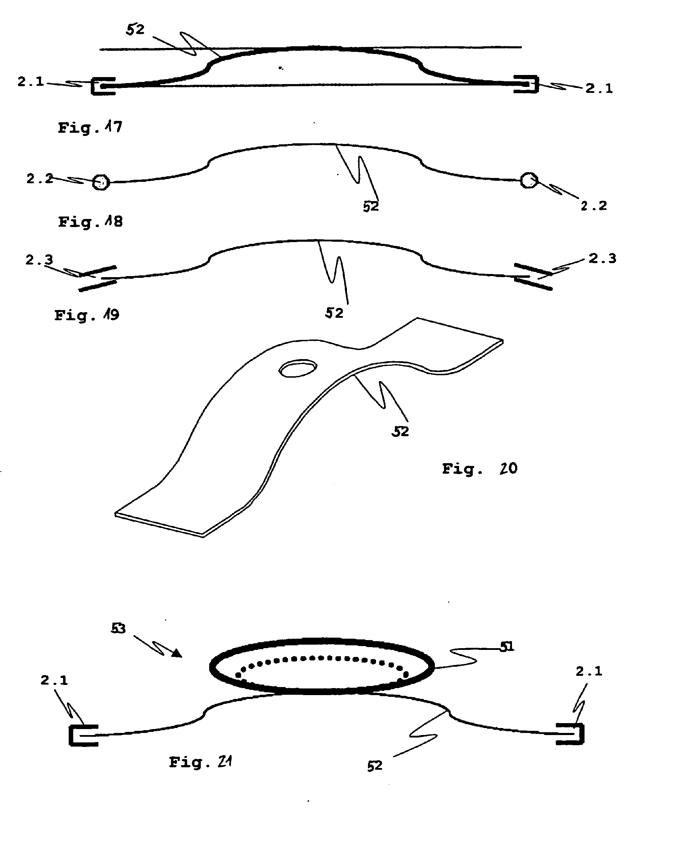

Fig. 20 zeigt eine schematische räumliche Darstellung des als nichtlineare Bandfeder 52 ausgeführten zweiten Federelements 52.

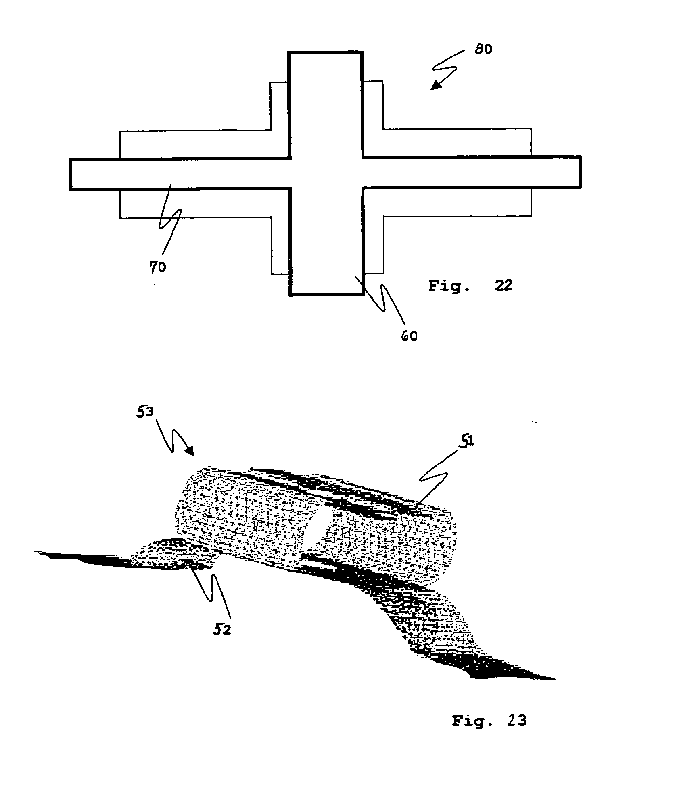

Fig. 21 zeigt eine schematische Darstellung einer erfindungsgemäßen Feder 53 mit einem als Linearfeder 51 ausgeführten ersten Federelements 51 und einem zweiten Federelement 52, das als Bandfeder 52 aus Fig. 17 ausgeführt ist. Durch Einstellen der Abmessungen der Linearfeder 51, d.h. der Breite, Dicke, Länge läßt sich die Federkonstante der Linearfeder 51 und damit die Steilheit des Abfalls im Bereich II der Kraft-Weg-Kennlinie der resultierenden Feder vorgeben. In Abhängigkeit von den Abmessungen der beiden Einzelfedern 51, 52 ergeben sich beispielsweise die in den Fig. 4 bis 8 dargestellten Kennlinien der Feder 53 und der Einzelfedern 51, 52.

Fig. 22 zeigt eine schematische Darstellung eines Stanzteils 80 zur Herstellung der erfindungsgemäßen Feder 53 mit einer ersten Fläche 60, aus der durch einen entsprechenden Biegevorgang das erste Federelement 51 hergestellt wird, und einer zweiten Fläche 20, aus der durch einen entsprechenden weiteren Biegevorgang das zweite Federelement 52 hergestellt wird. Aus dem einfach hergestellten kreuzförmigen Stanzteil 80 können durch entsprechende Biegevorgänge und durch eine entsprechende Wärmebehandlung die erste Einzelfeder und die zweite Einzelfeder 51, 52 mit den gewünschten Federcharakteristiken hergestellt werden.

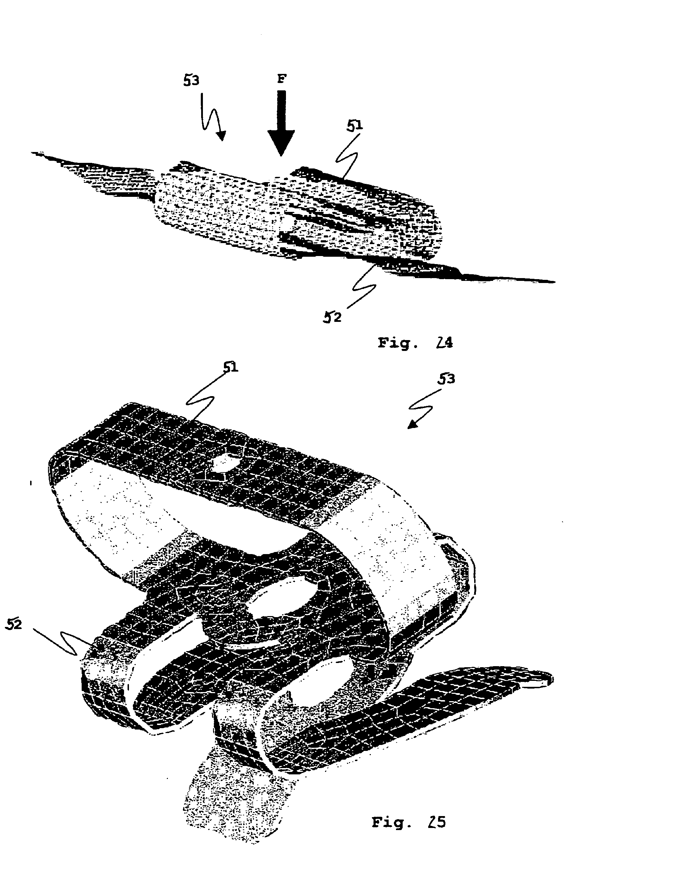

Fig. 23 und Fig. 24 zeigen jeweils eine schematische räumliche Darstellung einer erfindungsgemäßen Feder 53 aus einer Linearfeder 51 und einer nichtlinearen Bandfeder 52, welche aus dem kreuzförmigen Stanzteil 80 aus Fig. 22 hergestellt ist. Fig. 23 zeigt die erfindungsgemäße Feder 53 ohne äußere Krafteinwirkung und Fig. 24 zeigt die erfindungsgemäße Feder 53 mit einer äußeren Krafteinwirkung F.

Fig. 25 zeigt eine schematische räumliche Darstellung eines weiteren Ausführungsbeispiels der erfindungsgemäßen Feder 53 aus einem ersten Federelement 51 und einem zweiten Federelement 52. Der unter Teil 52 der Feder 53 weist eine nichtlineare Federcharakteristik und der obere Teil 51 weist eine lineare Federcharakteristik auf.

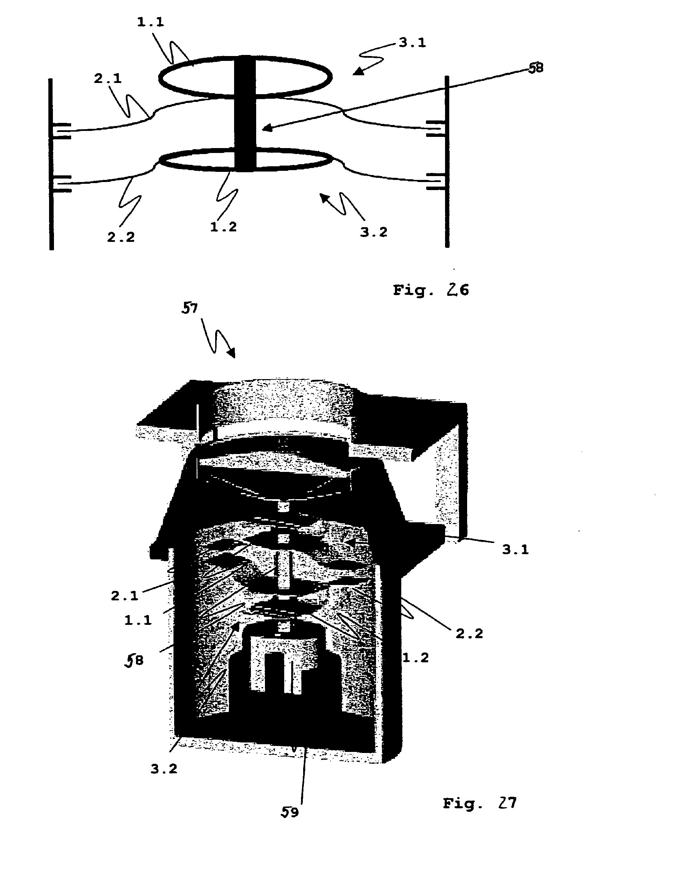

Fig. 26 zeigt eine schematische Schnittdarstellung eines Ausführungsbeispiels des erfindungsgemäßen Federsystems, bestehend aus einer Kombination von zwei Federn 3.1, 3.2, die jeweils eine serielle Anordnung eines ersten Federelements 1.1, 1.2 mit einer linearen Kraft-Weg-Kennlinie 51 und eines zweiten Federelements 2.1, 2.2 mit einer nichtlinearen Kraft-Weg-Kennlinie 52. Die beiden Federn 3.1, 3.2 sind über ein Distanzstück 58 miteinander gekoppelt.

Fig. 27 zeigt eine schematische Schnittdarstellung eines Ventils 7, in dem ein erfindungsgemäßes Federsystem angewendet wird, welches aus zwei Federn 3.1, 3.2 aufgebaut ist, die jeweils eine serielle Anordnung eines ersten Federelements 1.1, 1.2 mit einer linearen Kraft-Weg-Kennlinie 51 und eines zweiten Federelements 2.1, 2.2 mit einer nichtlinearen Kraft-Weg-Kennlinie 52 umfassen. Die beiden Federn 3.1, 3.2 sind ebenfalls über ein Distanzstück 58 miteinander gekoppelt. Das Ventil 57 umfaßt einen Aktuator 59, der beispielsweise als Tauchspule ausgeführt ist. Das Ventil 57 weist zwei selbsthaltende Endpositionen auf und der Aktuator 59 wird zur Überwindung der Halteenergie und zur Nachführung der Verlustenergie verwendet.

Durch das erfindungsgemäße Federsystem aus einer seriellen Anordnung einer linearen und einer nichtlinearen Feder wird eine kostengünstige Herstellung eines Federsystems ermöglicht, dessen Kraft-Weg-Kennlinie einen Bereich mit einem steilen Abfall aufweist. Die Kombination dieser beiden Federn ermöglicht die Bildung eines Systems mit einer stabilen Mittenlage sowie mit zwei stabilen Endpositionen, das beispielsweise zur Speicherung der kinetischen Energie im Zusammenhang mit einer Aktuatorbewegung oder dem leistungslosen Halten einer Endpositionen verwendet werden kann.

## Patentansprüche

1. Feder (10, 20) umfassend
zwei Federelemente (11, 12, 21, 22) von denen zumindest eines eine nichtlineare Kennlinie (K2) aufweist, wobei die Federelemente in Reihe geschaltet sind,
**dadurch gekennzeichnet,**
**daß** die zwei Federelemente (11, 12, 21, 22) zur Übertragung von Zug- und Druckkräften miteinander fest verbunden sind und die zusammengesetzte Feder (10, 20) eine Kraft-Weg-Kennlinie (K3) mit einem ansteigenden ersten Kennlinienabschnitt I mit einer Federrate R₁ bis zu einem Maximum und einen abfallenden zweiten Kennlinienabschnitt II mit einer Federrate R₂. aufweist.

2. Feder nach Anspruch 1,
**dadurch gekennzeichnet,**
**daß** eines der beiden Federelemente (11, 12, 21, 22) eine im wesentlichen lineare Kennlinie (K1) aufweist.

3. Feder nach einem der Ansprüche 1 oder 2,
**dadurch gekennzeichnet,**
**daß** die Federrate R₂ des zweiten Kennlinienabschnitts II dem Betrag nach größer ist als die Federrate R₁ des ersten Kennlinienabschnitts I, d.h. |R₂|>|R₁|.

4. Feder nach einem der Ansprüche 1 bis 3,
**dadurch gekennzeichnet,**
**daß** der zweite Kennlinienabschnitt II einen Nulldurchgang hat.

5. Feder nach Anspruch 4,
**dadurch gekennzeichnet,**
**daß** sich an den zweiten Kennlinienabschnitt II in einem Minimum ein dritter Kennlinienabschnitt III mit einem weiteren Nulldurchgang anschließt.

6. Feder nach einem der Ansprüche 1 bis 5,
**dadurch gekennzeichnet,**
**daß** das erste Federelement (11, 21) aus einer zu einer geschlossenen Kurve gebogenen Bandfeder gebildet wird.

7. Feder nach einem der Ansprüche 1 bis 6,
**dadurch gekennzeichnet,**
**daß** das zweite Federelement (12, 22) von einer mehrfach gebogenen Bandfeder, einer Membranfeder oder einer Tellerfeder gebildet wird.

8. Feder nach einem der Ansprüche 1 bis 7,
**dadurch gekennzeichnet,**
**daß** das erste Federelement und das zweite Federelement von Bandfedern gebildet werden, die aus einem einzigen insbesondere kreuzförmigen Blechzuschnitt oder Stanzteil gebogen sind.

9. Feder nach einem der Ansprüche 1 bis 7,
**dadurch gekennzeichnet,**
**daß** das erste Federelement und das zweite Federelement von Bandfedern gebildet werden, von denen eine mit der anderen mittels Laschen verklammert ist.

10. Federelement nach einem der Ansprüche 1 bis 7,
**dadurch gekennzeichnet,**
**daß** das erste Federelement und das zweite Federelement von Bandfedern gebildet werden, von denen eine mit der anderen vernietet ist.

11. Verwendung einer Feder nach einem der Ansprüche 1 bis 10 in einer Betätigungs- oder Verstellvorrichtung mit zwei stabilen Ruhe- bzw. Endstellungen,
**dadurch gekennzeichnet,**
**daß** die Federeinheit (10, 20) in den Ruhe- bzw. Endstellungen der Vorrichtung sich nahe den beiden Nulldurchgängen ihrer Federkennlinie befindet.

12. Federsystem, umfassend zwei Federn (10, 20) mit steil abfallender Federkennlinie, nach einem der Ansprüche 1 bis 10, die jeweils gebildet sind aus
zwei Federelementen (11, 12, 21, 22), von denen zumindest eines eine nichtlineare Kennlinie aufweist, wobei die Federelemente in Reihe geschaltet sind,
**dadurch gekennzeichnet,**
**daß** die Federelemente zur Übertragung von Zug- und Druckkräften miteinander fest verbunden sind und die Federn (10, 20) jeweils einen ansteigenden ersten Kennlinienabschnitt I mit einer Federrate R₁ bis zu einem Maximum und einen abfallenden zweiten Kennlinienabschnitt II mit einer Federrate R₂ haben, wobei die zwei Federn (10, 20) ihrerseits parallel geschaltet und zur Übertragung von Zug- und Druckkräften miteinander fest verbunden sind.

13. Federsystem nach Anspruch 12,
**dadurch gekennzeichnet,**
**daß** jeweils eines der beiden Federelemente (11, 12, 21, 22) eine im wesentlichen lineare Kennlinie aufweist.

14. Federsystem nach einem der Ansprüche 12 oder 13,
**dadurch gekennzeichnet,**
**daß** in jeder der Federn die Federrate R₂ des zweiten Kennlinienabschnitts II dem Betrag nach größer ist als die Federrate R₁ des ersten Kennlinienabschnitts', d.h. lR₂|>lR₁l.

15. Federsystem nach einem der Ansprüche 12 bis 14,
**dadurch gekennzeichnet,**
**daß** sich in beiden Federn an den zweiten Kennlinienabschnitt II in einem Minimum ein dritter Kennlinienabschnitt III mit einem weiteren Nulldurchgang anschließt.

16. Federsystem nach einem der Ansprüche 12 bis 15,
**dadurch gekennzeichnet,**
**daß** in zumindest einer Feder das erste Federelement von einer zu einer geschlossenen Kurve gebogenen Bandfeder gebildet wird.

17. Federsystem nach einem der Ansprüche 12 bis 16,
**dadurch gekennzeichnet,**
**daß** in zumindest einer Feder das zweite Federelement von einer mehrfach gebogenen Bandfeder, einer Membranfeder oder einer Tellerfeder gebildet wird.

18. Federsystem nach einem der Ansprüche 12 bis 17,
**dadurch gekennzeichnet,**
**daß** in zumindest einer Feder das erste Federelement und das zweite Federelement von Bandfedern gebildet werden, die aus einem einzigen insbesondere kreuzförmigen Blechzuschnitt oder Stanzteil gebogen sind.

19. Federsystem nach einem der Ansprüche 12 bis 17,
**dadurch gekennzeichnet,**
**daß** in zumindest einer Feder das erste Federelement und das zweite Feder element von Bandfedern gebildet werden, von denen eine mit der anderen mittels Laschen verklammert ist.

20. Federsystem nach einem der Ansprüche 12 bis 17,
**dadurch gekennzeichnet,**
**daß** in zumindest einer Feder das erste Federelement und das zweite Federelement von Bandfedern gebildet werden, von denen eine mit der anderen vernietet ist.

21. Verwendung eines Federsystems nach einem der Ansprüche 12 bis 20 in einer Betätigungsvorrichtung oder Verstellvorrichtung mit zwei stabilen Endstellungen oder Ruhestellungen,
**dadurch gekennzeichnet,**
**daß** beide Federn sich in den Endstellungen bzw. Ruhestellungen der Vorrichtung sich nahe den beiden Nulldurchgängen ihrer kombinierten Federkennlinien befindet.

22. Verwendung eines Federsystems nach einem der Ansprüche 12 bis 20, bei dem jeweils die beiden Federelemente mit linearer Kennlinie jeweils innen liegen und unmittelbar miteinander verbunden sind,
**dadurch gekennzeichnet,**
**daß** eine Krafteinleitung im Bereich der Verbindung der beiden Federelemente mit linearer Kennlinie erfolgt und die außenliegenden Federelemente mit nichtlinearer Kennlinie sich an außenliegenden festen Widerlagern abstützen.

23. Verwendung eines Federsystems nach einem der Ansprüche 12 bis 20, bei dem die beiden Federelemente mit linearer Kennlinie außen liegen und über eine Koppel miteinander verbunden sind,
**dadurch gekennzeichnet,**
**daß** eine Krafteinleitung in die Koppel erfolgt und die beiden innenliegenden Federelemente mit nichtlinearer Kennlinie sich an einem zentralen Widerlager abstützen.

## Claims

1. A spring (10, 20) comprising
two spring elements (11, 12, 21, 22) of which at least one comprises a non-linear characteristic curve (K2), wherein the spring elements are connected in series,
**characterised in**
**that**, for the purpose of transmitting tensile and compressive forces, the two spring elements (11, 12, 21, 22) are firmly connected to one another and that the assembled spring (10, 20) comprises a force/travel characteristic curve (K3) with a rising first characteristic curve portion I with a spring rate R₁ up to a maximum and a falling second characteristic curve portion II with a spring rate R₂.

2. A spring according to claim 1
**characterised in**
**that** one of the two spring elements (11, 12, 21, 22) comprises a substantially linear characteristic curve (K1) .

3. A spring according to any one of claims 1 or 2,
**characterised in**
**that** the spring rate R₂ of the second characteristic curve portion II, in respect of amount, is greater than the spring rate R₁ of the first characteristic curve portion I, i.e. |R₂|>|R₁|.

4. A spring according to any one of claims 1 to 3,
**characterised in**
**that** the second characteristic curve portion II comprises a zero crossing.

5. A spring according to claim 4,
**characterised in**
**that** the second characteristic curve portion II, in a minimum, is adjoined by a third characteristic curve portion III with a further zero crossing.

6. A spring according to any one of claims 1 to 5,
**characterised in**
**that** the first spring element (11, 21) is formed of a band spring formed into a closed curve.

7. A spring according to any one of claims 1 to 6,
**characterised in**
**that** the second spring element (12, 22) is formed by a multiply bent band spring, a membrane spring or a plate spring.

8. A spring according to any one of claims 1 to 7,
**characterised in**
**that** the first spring element and the second spring element are formed by band springs which are bent out of a single, more particularly cruciform cut plate metal piece or a punched piece.

9. A spring according to any one of claims 1 to 7,
**characterised in**
**that** the first spring element and the second spring element are formed of band springs of which one is clipped to the other by tabs.

10. A spring element according to any one of claims 1 to 7,
**characterised in**
**that** the first spring element and the second spring element are formed of band springs of which one is riveted to the other.

11. Using springs according to any one of claims 1 to 10 in an actuating or setting device with two stable resting or end positions,
**characterised in**
**that**, in the resting or end positions of the device, the spring unit (10, 20) is located close to the two zero crossings of its characteristic spring curve.

12. A spring system comprising of two springs (10, 20) with steeply dropping characteristic spring curves, according to any one of claims 1 to 10, which are each formed of
two spring elements (11, 12, 21, 22) of which at least one comprises a non-linear characteristic curve, wherein the spring elements are connected in series,
**characterised in**
**that**, for the purpose of transmitting tensile and compressive forces, the spring elements are firmly connected to one another and that the springs (10, 20) each comprise a rising first characteristic curve portion I with a spring rate R₁ up to a maximum and a falling second characteristic curve portion II with a spring rate R₂, wherein the two springs (10, 20), in turn, are connected in parallel and are firmly connected to one another for the purpose of transmitting tensile and compressive forces.

13. A spring system according to claim 12,
**characterised in**
**that** one each of the two spring elements (11, 12, 21, 22) comprises a substantially linear characteristic curve.

14. A spring system according to any one of claims 12 or 13,
**characterised in**
**that** in each of the springs, the spring rate R₂ of the second characteristic curve portion II, in respect of amount, is greater than the spring rate R₁ of the first characteristic curve portion, i.e. |R₂|>|R₁|.

15. A spring system according to any one of claims 12 to 14,
**characterised in**
**that** in both springs, a second characteristic curve portion II, in a minimum, is adjoined by a third characteristic curve portion III I with a further zero crossing.

16. A spring system according to any one of claims 12 to 15,
**characterised in**
**that** in at least one spring, a first spring element is formed by a band spring bent to form a closed curve.

17. A spring system according to any one of claims 12 to 16,
**characterised in**
**that** in at least one spring, the second spring element is formed by a multiply bent band spring, a membrane spring or a plate spring.

18. A spring system according to any one of claims 12 to 17,
**characterised in**
**that** in at least one spring, the first spring element and the second spring element are formed by band springs which are bent out of one single, more particularly cruciform cut plate metal piece or a punched part.

19. A spring system according to any one of claims 12 to 17,
**characterised in**
**that** in at least one spring, the first spring element and the second spring element is formed of band springs of which one is clipped to the other by tabs.

20. A spring system according to any one of claims 12 to 17,
**characterised in**
**that** in at least one spring, the first spring element and the second spring element are formed by band springs of which one is riveted to the other.

21. Using a spring system according to any one of claims 12 to 20 in an actuating device or setting device with two stable end positions or resting positions,
**characterised in**
**that** in their end positions or resting positions, both springs are located close to the two zero crossings of their combined characteristic spring curves.

22. Using a spring system according to any one of claims 12 to 20, wherein the two spring elements each with a linear characteristic curve are positioned inside and are directly connected to one another,
**characterised in**
**that** an introduction of force takes place in the region of the connection of the two spring elements with linear characteristic curves and that the outer spring elements with non-linear characteristic curves are supported in externally positioned fixed abutments.

23. Using a spring system according to any one of claims 12 to 20, wherein the two spring elements with linear characteristic curves are positioned on the outside and are connected to one another by a coupler,
**characterised in**
**that** a force is introduced into the coupler and that the two inner spring elements with non-linear characteristic curves are supported on a central abutment.

## Revendications

1. Ressort (10, 20), comprenant
deux éléments de ressort (11, 12, 21, 22) dont l'un au moins présente une courbe caractéristique (K2) non linéaire, les éléments de ressort étant agencés en série,
**caractérisé en ce que**
les deux éléments de ressort (11, 12, 21, 22) sont fermement reliés l'un à l'autre pour transmettre des forces de traction et de compression, et le ressort assemblé (10, 20) présente une courbe caractéristique force/course (K3) avec une première portion croissante I d'une constante d'élasticité R₁ jusqu'à un maximum et une seconde portion décroissante II d'une constante d'élasticité R₂.

2. Ressort selon la revendication 1,
**caractérisé en ce que**
l'un des deux éléments de ressort (11, 12, 21, 22) présente une courbe caractéristique (K1) sensiblement linéaire.

3. Ressort selon l'une des revendications 1 ou 2,
**caractérisé en ce que**
la constante d'élasticité R₂ de la seconde portion II de la courbe caractéristique est d'un montant supérieur à celui de la constante d'élasticité R₁ de la première portion I de la courbe caractéristique, c'est-à-dire |R₂|>| R₁|.

4. Ressort selon l'une des revendications 1 à 3,
**caractérisé en ce que**
la deuxième portion II de la courbe caractéristique présente un passage par zéro.

5. Ressort selon la revendication 4,
**caractérisé en ce que**
à la seconde portion II de la courbe caractéristique, au niveau d'un minimum, se raccorde une troisième portion III de la courbe caractéristique présentant un autre passage par zéro.

6. Ressort selon l'une des revendications 1 à 5,
**caractérisé en ce que**
le premier élément de ressort (11, 21) est constitué par un ressort à lame cintré pour former une courbe fermée.

7. Ressort selon l'une des revendications 1 à 6,
**caractérisé en ce que**
le second élément de ressort (12, 22) est constitué par un ressort à lame cintré plusieurs fois, par un ressort à membrane ou par un ressort Belleville.

8. Ressort selon l'une des revendications 1 à 7,
**caractérisé en ce que**
le premier élément de ressort et le second élément de ressort sont constitués par des ressorts à lame qui sont cintrés à partir d'un seul flan de tôle ou élément poinçonné en particulier en forme de croix.

9. Ressort selon l'une des revendications 1 à 7,
**caractérisé en ce que**
le premier élément de ressort et le second élément de ressort sont constitués par des ressorts à lame dont l'un est agrafé sur l'autre au moyen de pattes.

10. Ressort selon l'une des revendications 1 à 7,
**caractérisé en ce que**
le premier élément de ressort et le second élément de ressort sont constitués par des ressorts à lame dont l'un est riveté sur l'autre.

11. Utilisation d'un ressort selon l'une des revendications 1 à 10 dans un dispositif d'actionnement ou de déplacement à deux positions de repos ou terminales stables,
**caractérisée en ce que**
dans les positions de repos ou terminales du dispositif, l'unité de ressort (10, 20) se trouve à proximité des passages par zéro de sa courbe caractéristique d'élasticité.

12. Système de ressort, comportant deux ressorts (10, 20) à courbe caractéristique d'élasticité à décroissance raide, selon l'une des revendications 1 à 10, formés chacun par deux éléments de ressort (11, 12, 21, 22) dont l'un au moins présente une courbe caractéristique non linéaire, les éléments de ressort étant agencés en série,
**caractérisé en ce que**
les éléments de ressort sont fermement reliés l'un à l'autre pour transmettre des forces de traction et de compression, et les ressorts (10, 20) présentent chacun une première portion de courbe caractéristique croissante 1 d'une constante d'élasticité R₁ jusqu'à un maximum et une seconde portion de courbe caractéristique décroissante II d'une constante d'élasticité R₂, les deux ressorts (10, 20) étant agencés à leur tour parallèlement et étant fermement reliés l'un à l'autre pour transmettre des forces de traction et de compression.

13. Système de ressort selon la revendication 12,
**caractérisé en ce que**
l'un des deux éléments de ressort (11, 12, 21, 22) présente une courbe caractéristique sensiblement linéaire.

14. Système de ressort selon l'une des revendications 12 ou 13,
**caractérisé en ce que**
dans chacun des ressorts la constante d'élasticité R₂ de la seconde portion II de la courbe caractéristique est d'un montant supérieur à celui de la constante d'élasticité R₁ de la première portion I de la courbe caractéristique, c'est-à-dire |R₂|>| R₁|.

15. Système de ressort selon l'une des revendications 12 à 14,
**caractérisé en ce que**
dans les deux ressorts, à la seconde portion II de la courbe caractéristique, au niveau d'un minimum, se raccorde une troisième portion III de la courbe caractéristique présentant un autre passage par zéro.

16. Système de ressort selon l'une des revendications 12 à 15,
**caractérisé en ce que**
dans au moins un ressort, le premier élément de ressort est constitué par un ressort à lame cintré pour former une courbe fermée.

17. Système de ressort selon l'une des revendications 12 à 16,
**caractérisé en ce que**
dans au moins un ressort, le second élément de ressort est constitué par un ressort à lame cintré plusieurs fois, par un ressort à membrane ou par un ressort Belleville.

18. Système de ressort selon l'une des revendications 12 à 17,
**caractérisé en ce que**
dans au moins un ressort, le premier élément de ressort et le second élément de ressort sont constitués par des ressorts à lame qui sont cintrés à partir d'un seul flan de tôle ou élément poinçonné en particulier en forme de croix.

19. Système de ressort selon l'une des revendications 12 à 17,
**caractérisé en ce que**
dans au moins un ressort, le premier élément de ressort et le second élément de ressort sont constitués par des ressorts à lame dont l'un est agrafé sur l'autre au moyen de pattes.

20. Système de ressort selon l'une des revendications 12 à 17,
**caractérisé en ce que**
dans au moins un ressort, le premier élément de ressort et le second élément de ressort sont constitués par des ressorts à lame dont l'un est riveté sur l'autre.

21. Utilisation d'un système de ressort selon l'une des revendications 12 à 20 dans un dispositif d'actionnement ou de déplacement à deux positions de repos ou terminales stables,
**caractérisée en ce que**
dans les positions de repos ou terminales du dispositif, les deux ressorts se trouvent à proximité des deux passages par zéro de leurs courbes caractéristiques d'élasticité combinées.

22. Utilisation d'un système de ressort selon l'une des revendications 12 à 20, dans lequel les deux éléments de ressort respectifs à courbe caractéristique linéaire se trouvent chacun à l'intérieur et sont reliés directement l'un à l'autre,
**caractérisée en ce que**
l'application d'une force s'effectue dans la zone de la liaison des deux éléments de ressort à courbe caractéristique linéaire, et les éléments de ressort situés à l'extérieur et présentant une courbe caractéristique non linéaire prennent appui contre des contrebutées extérieures fixes.

23. Utilisation d'un système de ressort selon l'une des revendications 12 à 20, dans lequel les deux éléments de ressort à courbe caractéristique linéaire se trouvent à l'extérieur et sont reliés l'un à l'autre via une bielle,
**caractérisée en ce que**
l'application d'une force s'effectue dans la bielle, et les deux éléments de ressort situés à l'intérieur et présentant une courbe caractéristique non linéaire prennent appui contre une contrebutée centrale.
